# EUROPÄISCHE PATENTSCHRIFT

(11) **EP 3 869 390 B1**
(45) Veröffentlichungstag und Bekanntmachung des Hinweises auf die Patenterteilung: **23.07.2025**
(21) Anmeldenummer: 20157831.7
(22) Anmeldetag: 18.02.2020
(51) Int. Cl.: G06V 10/774, G06V 20/20, G06V 20/58

(54) **COMPUTERIMPLEMENTIERTES VERFAHREN UND SYSTEM ZUM ERZEUGEN EINER VIRTUELLEN FAHRZEUGUMGEBUNG**
COMPUTER-IMPLEMENTED METHOD AND SYSTEM FOR CREATING A VIRTUAL VEHICLE ENVIRONMENT
PROCÉDÉ ET SYSTÈME MIS EN UVRE PAR ORDINATEUR PERMETTANT DE GÉNÉRER UN ENVIRONNEMENT VIRTUEL DE VÉHICULE

(43) Veröffentlichungstag der Anmeldung: 25.08.2021
(73) Patentinhaber: dSPACE GmbH, 33102 Paderborn (DE)
(72) Erfinder: Henning, Steffen, 33102 Paderborn (DE); Püschl, Thorsten, 33102 Paderborn (DE); Thurau, Matthias, 33102 Paderborn (DE)

(56) Entgegenhaltungen:
- US-A1- 2019 156 558
- US-A1- 2019 311 487

## Beschreibung

Die vorliegende Erfindung betrifft ein computerimplementiertes Verfahren zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung.

Die vorliegende Erfindung betrifft des Weiteren ein System zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung.

Die vorliegende Erfindung betrifft überdies ein Computerprogramm und einen computerlesbaren Datenträger.

### Stand der Technik

Grafische Benutzeroberflächen zum Testen hochautomatisierter Fahrfunktionen eines Kraftfahrzeugs weisen in der Regel eine Mehrzahl von Komponenten auf, welche eine Verwaltung von Parametersätzen, eine Erstellung einer virtuellen Fahrzeugumgebung sowie eine Experimentverwaltung ermöglichen.

Ein Szenenaufbau der virtuellen Fahrzeugumgebung, d.h. eine Definition statischer und dynamischer Objekte einer Szene, erfolgt dabei durch manuelle Konfiguration und Import von in einer Objektbibliothek hinterlegten Objekten.

CN 000205121971 U offenbart ein Verfahren zum Testen autonomer Fahrzeuge. Gemäß dem Verfahren wird ein autonomes Fahrzeug in einer Simulationsumgebung erzeugt. Gemäß vorab aufgezeichneter Zustandsinformationen eines virtuellen Fahrzeugs wird in der Simulationsumgebung eine Verkehrsumgebung aufgebaut, um dem autonomen Fahrzeug zu ermöglichen, in der Verkehrsumgebung zu fahren.

Die vorstehend genannten Verfahren haben jedoch gemeinsam, dass ein hoher Aufwand zum Erzeugen der virtuellen Fahrzeugumgebung zum Testen der hochautomatisierten Fahrfunktionen des Kraftfahrzeugs vorhanden ist, was einen hohen personellen und kostenseitigen Aufwand zur Folge hat.

US2019311487A1 offenbart ein Verfahren zum Bereitstellen einer Szene basierend aus einer Lidar-Punktwolke, welche um Objekte, repräsentiert durch gespeicherte Lidar-Punktwolken, erweitert werden. Die Auswahl der Erweiterung kann durch einen Benutzer und / oder durch bereitstellen weiterer Bilddaten erfolgen.

Das Verfahren beschriebt dabei allerdings nicht den Aufbau einer neuen virtuelle Fahrzeugumgebung, sondern nur die Erweiterung bestehender Szenen.

US2019156558A1 beschreibt ein System und Verfahren zum Erstellen von Szenen für eine Virtual Reality Anwendung.

Es wird jedoch kein Verfahren angegeben, welches eine möglichst genaue Repräsentation von vorerfasster Videobilddaten, Radardaten und/oder einer Lidarpunktwolke in einer virtuellen, synthetischen Fahrzeugumgebung nahelegt.

Demzufolge besteht ein Bedarf, bestehende Verfahren und Systeme zum Erzeugen einer virtuellen Fahrzeugumgebung zum Testen hochautomatisierter Fahrfunktionen eines Kraftfahrzeugs dahingehend zu verbessern, dass eine vereinfachte, effizientere und kostengünstigere Erstellung der virtuellen Fahrzeugumgebung ermöglicht wird.

Es ist daher Aufgabe der Erfindung, ein computerimplementiertes Verfahren, ein System, ein Computerprogramm und einen computerlesbaren Datenträger anzugeben, welche eine vereinfachte, effizientere und kostengünstigere Erzeugung einer virtuellen Fahrzeugumgebung zum Testen hochautomatisierter Fahrfunktionen eines Kraftfahrzeugs ermöglichen.

### Offenbarung der Erfindung

Die Aufgabe wird erfindungsgemäß gelöst durch ein computerimplementiertes Verfahren zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung nach Patentanspruch 1, ein System zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung nach Patentanspruch 11, ein Computerprogramm nach Patentanspruch 12 und einen computerlesbaren Datenträger nach Patentanspruch 13.

Die Erfindung betrifft ein computerimplementiertes Verfahren zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung.

Das Verfahren umfasst ein Empfangen der vorerfassten Videobilddaten, Radardaten und/oder der Lidarpunktwolke der realen Fahrzeugumgebung einschließlich einer Vielzahl vorab gekennzeichneter oder nachfolgend durch Anwenden zumindest eines ersten Algorithmus maschinellen Lernens gekennzeichneter, realer Objekte.

Die reale Fahrzeugumgebung entspricht einer Fahrzeugumgebung des Kraftfahrzeugs im Straßenverkehr, insbesondere in einer Mehrzahl von Verkehrssituationen des Straßenverkehrs. Die realen Objekte können statische Objekte wie beispielsweise Verkehrszeichen, Gebäude, Bepflanzung und/oder parkende Kraftfahrzeuge sein. Ferner können die realen Objekte dynamische Objekte wie beispielsweise fahrende Kraftfahrzeuge sein.

Das Verfahren umfasst ferner ein Erzeugen eines ein jeweiliges reales Objekt repräsentierenden ersten Merkmalsvektors durch Anwenden eines zweiten Algorithmus maschinellen Lernens auf das jeweilige reale Objekt und Speichern des ersten Merkmalsvektors.

Das Verfahren umfasst des Weiteren ein Bereitstellen einer Vielzahl gespeicherter, zweiter Merkmalsvektoren, welche synthetisch generierte Objekte repräsentieren sowie ein Identifizieren eines ein größtes Ähnlichkeitsmaß zum ersten Merkmalsvektor aufweisenden zweiten Merkmalsvektors.

Das Ähnlichkeitsmaß kann anhand vorgegebener Eigenschaften des ersten Merkmalsvektors und des zweiten Merkmalsvektors definiert sein.

Die synthetisch generierten Objekte sind in verschiedene Objektkategorien gegliedert und repräsentieren die in den Videobilddaten, Radardaten und/oder der Lidarpunktwolke der realen Fahrzeugumgebung gekennzeichneten realen Objekte.

Das Verfahren umfasst darüber hinaus ein Selektieren des identifizierten zweiten Merkmalsvektors und Aufrufen eines gespeicherten, dem zweiten Merkmalsvektor zugeordneten synthetischen Objekts, welches dem realen Objekt entspricht oder prozedurales Generieren des dem realen Objekt entsprechenden synthetischen Objekts in Abhängigkeit des identifizierten Ähnlichkeitsmaßes sowie Integrieren des synthetischen Objekts in eine vorgegebene virtuelle Fahrzeugumgebung, wobei die virtuelle Fahrzeugumgebung eine computergenerierte Repräsentation der sensorbasiert erfassten realen Fahrzeugumgebung ist, wobei falls das Ähnlichkeitsmaß (MA) des identifizierten zweiten Merkmalsvektors (M2) zum ersten Merkmalsvektor (M1) größer oder gleich einem vorgegebenen Schwellwert (T) ist, der identifizierte zweite Merkmalsvektor (M2) selektiert wird und das gespeicherte, dem zweiten Merkmalsvektor (M2) zugeordnete synthetische Objekt (14a, 14b, 14c, 14d, 14e), welches dem realen Objekt (12a, 12b, 12c, 12d, 12e) entspricht, aufgerufen (S6A) wird, und wobei falls das Ähnlichkeitsmaß (MA) des identifizierten zweiten Merkmalsvektors (M2) zum ersten Merkmalsvektor (M1) kleiner einem vorgegebenen Schwellwert (T) ist, das synthetische Objekt (14a, 14b, 14c, 14d, 14e) prozedural generiert wird (S6B).

Die virtuelle Fahrzeugumgebung ist eine computergenerierte Repräsentation der sensorbasiert erfassten realen Fahrzeugumgebung.

Das prozedurale Generieren bezeichnet ein Verfahren zum Erzeugen von 3-D Objekten in Echtzeit während der Ausführung des Computerprogramms.

Die 3-D Objekte werden hierbei nicht zufällig erzeugt, sondern die Generierung folgt deterministischen Algorithmen, um bei gleichen Ausgangsbedingungen immer wieder dieselben Inhalte erzeugen zu können.

Die Erfindung betrifft des Weiteren ein System zum Erzeugen einer virtuellen Fahrzeugumgebung zum Testen hochautomatisierter Fahrfunktionen eines Kraftfahrzeugs unter Verwendung vorerfasster Videobilddaten, Radardaten und/oder einer Lidarpunktwolke einer realen Fahrzeugumgebung. Das System umfasst Mittel zum Empfangen der vorerfassten Videobilddaten, Radardaten und/oder der Lidarpunktwolke der realen Fahrzeugumgebung einschließlich einer Vielzahl vorab gekennzeichneter oder nachfolgend durch Anwenden zumindest eines ersten Algorithmus maschinellen Lernens gekennzeichneter, realer Objekte.

Das System umfasst ferner Mittel zum Anwenden zumindest eines ersten Algorithmus maschinellen Lernens auf die Videobilddaten, die Radardaten und/oder die Lidarpunktwolke zum Detektieren und Klassifizieren der Vielzahl realer Objekte sowie Mittel zum Erzeugen eines ein jeweiliges reales Objekt repräsentierenden ersten Merkmalsvektors, welche Mittel dazu eingerichtet sind, einen zweiten Algorithmus maschinellen Lernens auf das jeweilige reale Objekt anzuwenden und Mittel zum Speichern des ersten Merkmalsvektors.

Das System umfasst darüber hinaus Mittel zum Bereitstellen einer Vielzahl gespeicherter, zweiter Merkmalsvektoren, welche synthetisch generierte Objekte repräsentieren sowie Mittel zum Identifizieren eines ein größtes Ähnlichkeitsmaß zum ersten Merkmalsvektor aufweisenden zweiten Merkmalsvektors.

Das System umfasst darüber hinaus Mittel zum Selektieren des identifizierten zweiten Merkmalsvektors und Aufrufen eines gespeicherten, dem zweiten Merkmalsvektor zugeordneten synthetischen Objekts, welches dem realen Objekt entspricht und Mittel zum prozeduralen Generieren des dem realen Objekt entsprechenden synthetischen Objekts, wobei die Mittel zum Selektieren des identifizierten zweiten Merkmalsvektors und Aufrufen eines gespeicherten, dem zweiten Merkmalsvektor zugeordneten synthetischen Objekts oder die Mittel zum prozeduralen Generieren des dem realen Objekt entsprechenden synthetischen Objekts in Abhängigkeit des identifizierten Ähnlichkeitsmaßes eingesetzt werden.

Ferner weist das System Mittel zum Integrieren des synthetischen Objekts in eine vorgegebene virtuelle Fahrzeugumgebung auf, wobei die virtuelle Fahrzeugumgebung eine computergenerierte Repräsentation der sensorbasiert erfassten realen Fahrzeugumgebung ist, wobei falls das Ähnlichkeitsmaß (MA) des identifizierten zweiten Merkmalsvektors (M2) zum ersten Merkmalsvektor (M1) größer oder gleich einem vorgegebenen Schwellwert (T) ist, der identifizierte zweite Merkmalsvektor (M2) selektierbar ist und das gespeicherte, dem zweiten Merkmalsvektor (M2) zugeordnete synthetische Objekt (14a, 14b, 14c, 14d, 14e), welches dem realen Objekt (12a, 12b, 12c, 12d, 12e) entspricht, aufrufbar ist, und wobei falls das Ähnlichkeitsmaß (MA) des identifizierten zweiten Merkmalsvektors (M2) zum ersten Merkmalsvektor (M1) kleiner einem vorgegebenen Schwellwert (T) ist, das synthetische Objekt (14a, 14b, 14c, 14d, 14e) prozedural generierbar ist.

Die Erfindung betrifft ferner ein Computerprogramm mit Programmcode, um das erfindungsgemäße Verfahren durchzuführen, wenn das Computerprogramm auf einem Computer ausgeführt wird.

Die Erfindung betrifft darüber hinaus einen computerlesbaren Datenträger mit Programmcode eines Computerprogramms, um das erfindungsgemäße Verfahren durchzuführen, wenn das Computerprogramm auf einem Computer ausgeführt wird.

Eine Idee der vorliegenden Erfindung ist es, aus realen Videobilddaten einer Messfahrt eines Kraftfahrzeugs automatisch eine synthetische 3-D Szene aufzubauen.

Aufgrund des Erzeugens eines ein jeweiliges reales Objekt repräsentierenden ersten Merkmalsvektors durch Anwenden eines Algorithmus maschinellen Lernens auf das jeweilige reale Objekt ist es in vorteilhafter Weise nicht notwendig, eine direkte Objekterkennung und Zuordnung zu einem synthetischen Objekt durchzuführen.

Im Rahmen einer direkten Objekterkennung müssten jeweilige Objekte durch ein künstliches neuronales Netz erkannt werden. Hierfür wäre ein aufwendiges Training des künstlichen neuronalen Netzes unter Verwendung eines großen Satzes von Trainingsdaten erforderlich.

Anstelle dessen kann im Rahmen der vorliegenden Erfindung auf bestehende Daten typischer Objekte einer Verkehrsszene zurückgegriffen werden, die in einer Datenbank abgelegt bzw. gespeichert sind. Somit ist eine einfache Zuordnung des zweiten Merkmalsvektors zu einem entsprechenden synthetischen Objekt möglich.

Durch Vergleich der jeweilige reale Objekte repräsentierenden ersten Merkmalsvektoren mit bereits vorhandenen synthetisch generierte Objekte repräsentierenden zweiten Merkmalsvektoren kann somit in vorteilhafter Weise ermöglicht werden, dass eine automatische Zuordnung sich entsprechender realer und synthetisch generierter Objekte erfolgt, sodass die so identifizierten synthetisch generierten Objekte dann in die virtuelle Fahrzeugumgebung integrierbar sind.

Durch die Automatisierung des Szenenaufbaus der virtuellen Fahrzeugumgebung unter Verwendung der aus der realen Fahrzeugumgebung gewonnenen Daten kann somit in vorteilhafter Weise eine deutliche Vereinfachung des Szenenaufbaus der virtuellen Fahrzeugumgebung in Verbindung mit einem beträchtlichen Effizienzgewinn und einer damit einhergehenden Kostenreduzierung erreicht werden.

Weitere Ausführungsformen der vorliegenden Erfindung sind Gegenstand der weiteren Unteransprüche und der nachfolgenden Beschreibung unter Bezugnahme auf die Figuren.

Gemäß einem Aspekt der Erfindung umfasst das Verfahren ferner, dass das Kennzeichnen, insbesondere ein Detektieren und Klassifizieren, der Vielzahl realer Objekte durch einen Algorithmus überwachten Lernens oder durch einen Algorithmus unüberwachten Lernens, insbesondere ein künstliches neuronales Netz, durchgeführt wird.

Somit kann in vorteilhafter Weise ein in Abhängigkeit einer Datenart und/oder sonstiger systemischer Vorgaben geeigneter Algorithmus verwendet werden.

Somit kann in vorteilhafter Weise ermöglicht werden, dass ein zu dem selektierten realen Objekt ein hohes Ähnlichkeitsmaß aufweisendes synthetisches Objekt aufrufbar ist.

Auch wenn keine ausreichende Übereinstimmung des dem realen Objekt entsprechenden ersten Merkmalsvektors mit einem der Vielzahl von synthetisch generierten Objekten entsprechenden zweiten Merkmalsvektoren vorhanden ist, kann jedoch in vorteilhafter Weise dennoch durch die prozedurale Generierung des synthetischen Objekts ein dem realen Objekt entsprechendes synthetisches Objekt generiert werden.

Gemäß einem weiteren Aspekt der Erfindung weist das Verfahren ferner den Schritt auf, dass das prozedurale Generieren des synthetischen Objekts unter Verwendung des durch den zweiten Algorithmus maschinellen Lernens erzeugten ersten Merkmalsvektor durchgeführt wird.

Somit kann in vorteilhafter Weise gewährleistet werden, dass das derart generierte synthetische Objekt in hohem Maße dem zugrunde liegenden realen Objekt entspricht.

Gemäß einem weiteren Aspekt der Erfindung umfasst das Verfahren ferner, dass der zweite Algorithmus maschinellen Lernens zum Erzeugen, insbesondere zum Kodieren, des ersten Merkmalsvektors durch einen ersten variational Autoencoder gebildet ist. Der variational Autoencoder weist den Vorteil auf, dass dieser eine dimensionsreduzierte bzw. komplexitätsreduzierte Repräsentation der zugrunde liegenden Realdaten erzeugen kann.

Gemäß einem weiteren Aspekt der Erfindung umfasst das Verfahren des ferner, dass der ein jeweiliges synthetisches Objekt repräsentierende zweite Merkmalsvektor durch Anwenden eines dritten Algorithmus maschinellen Lernens auf das jeweilige synthetische Objekt erzeugt wird, und wobei der zweite Merkmalsvektor in einem Datenspeicher gespeichert wird.

Somit kann eine Zuordnung bzw. ein Merkmalsvergleich der ersten Merkmalsvektoren und der zweiten Merkmalsvektoren durchgeführt werden und somit eine Zuordnung der realen Objekte zu synthetischen Objekten erfolgen.

Gemäß einem weiteren Aspekt der Erfindung umfasst das Verfahren ferner, dass durch den ersten Algorithmus maschinellen Lernens die in den Videobilddaten, den Radardaten und/oder der Lidarpunktwolke enthaltenen realen Objekte in Hauptklassen klassifiziert werden, wobei die einer Hauptklasse zugeordneten realen Objekte durch Anwenden eines vierten Algorithmus maschinellen Lernens in Unterklassen klassifiziert werden.

Somit kann in vorteilhafter Weise eine schrittweise Klassifizierung der in den Realdaten enthaltenen Objekten durchgeführt werden. In einem ersten Schritt erfolgt hierbei eine Grobklassifikation der realen Objekte in Hauptklassen. In einem zweiten Schritt wird sodann eine Detailklassifikation der jeweiligen den Hauptklassen zugeordneten realen Objekte in entsprechende Unterklassen durchgeführt.

Gemäß einem weiteren Aspekt der Erfindung umfasst das Verfahren darüber hinaus, dass bei Gleichartigkeit, insbesondere einer gleichartigen Datenstruktur, des ersten Merkmalsvektors und des zweiten Merkmalsvektors zum Identifizieren des Ähnlichkeitsmaßes ein direkter Vergleich zwischen dem ersten Merkmalsvektor und der Vielzahl zweiter Merkmalsvektoren durchgeführt wird.

Somit kann in vorteilhafter Weise eine effiziente Identifizierung eines geeigneten zweiten Merkmalsvektors bzw. ein Vergleich der ersten Merkmalsvektoren mit den zweiten Merkmalsvektoren ohne sonstige Zwischenschritte ermöglicht werden.

Gemäß einem weiteren Aspekt der Erfindung umfasst das Verfahren ferner, dass bei Verschiedenartigkeit, insbesondere einer verschiedenartigen Datenstruktur, des ersten Merkmalsvektors und des zweiten Merkmalsvektors ein eine Korrelation zwischen dem ersten Merkmalsvektor und dem zweiten Merkmalsvektor herstellender Klassifikator verwendet wird, um das Ähnlichkeitsmaß des zweiten Merkmalsvektors zum ersten Merkmalsvektor zu identifizieren.

Somit ist in vorteilhafter Weise ebenfalls bei Verwendung verschiedenartiger Merkmalsvektoren mit beispielsweise verschiedenartigen Kodierungen das Herstellen einer Korrelation zwischen den unterschiedlichen Merkmalsvektoren und somit die Zuordnung entsprechender erster Merkmalsvektoren zu entsprechenden zweiten Merkmalsvektoren möglich.

Gemäß einem weiteren Aspekt der Erfindung umfasst das Verfahren darüber hinaus, dass die Vielzahl gespeicherter, erster Merkmalsvektoren und/oder zweiter Merkmalsvektoren, 2-D Bilddaten, 3-D Bilddaten, Radardaten und/oder eine Lidarpunktwolke repräsentieren.

Die den zweiten Merkmalsvektoren zugrunde liegenden Quelldaten können somit in vorteilhafter Weise unterschiedlicher Art sein, sodass eine Vielzahl unterschiedlicher real gewonnener Quelldaten verwendbar und mit synthetisch generierten Objekten bzw. Objektdaten korrelierbar bzw. zu diesen zuordbar sind.

Gemäß einem weiteren Aspekt der Erfindung umfasst das Verfahren des Weiteren, dass falls das Ähnlichkeitsmaß des identifizierten zweiten Merkmalsvektors zum ersten Merkmalsvektor kleiner dem vorgegebenen Schwellwert ist, eine Meldung erzeugt wird, dass die gespeicherte Vielzahl zweiter Merkmalsvektoren kein ausreichendes Ähnlichkeitsmaß zum identifizierten ersten Merkmalsvektor aufweisen.

Der Benutzer wird somit in vorteilhafter Weise über diesen Umstand informiert und kann so beispielsweise eine Erweiterung eines Datenspeichers der den zweiten Merkmalsvektoren zugrunde liegenden synthetisch generierten Objekten vornehmen.

Die hierin beschriebenen Merkmale des Verfahrens sind ebenfalls auf andere virtuelle Umgebungen wie beispielsweise das Testen anderer Fahrzeugarten in verschiedenen Umgebungen anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind. Es zeigen:
- Fig. 1: ein Ablaufdiagramm eines Verfahrens zum Erzeugen einer virtuellen Fahrzeugumgebung zum Testen hochautomatisierter Fahrfunktionen eines Kraftfahrzeugs gemäß einer bevorzugten Ausführungsform der Erfindung;
- Fig. 2: ein schematisches Diagramm der Anwendung des Verfahrens auf eine reale Fahrzeugumgebung zum Erzeugen der virtuellen Fahrzeugumgebung gemäß der bevorzugten Ausführungsform der Erfindung; und
- Fig. 3: ein Diagramm eines Systems zum Erzeugen der virtuellen Fahrzeugumgebung zum Testen hochautomatisierter Fahrfunktionen des Kraftfahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

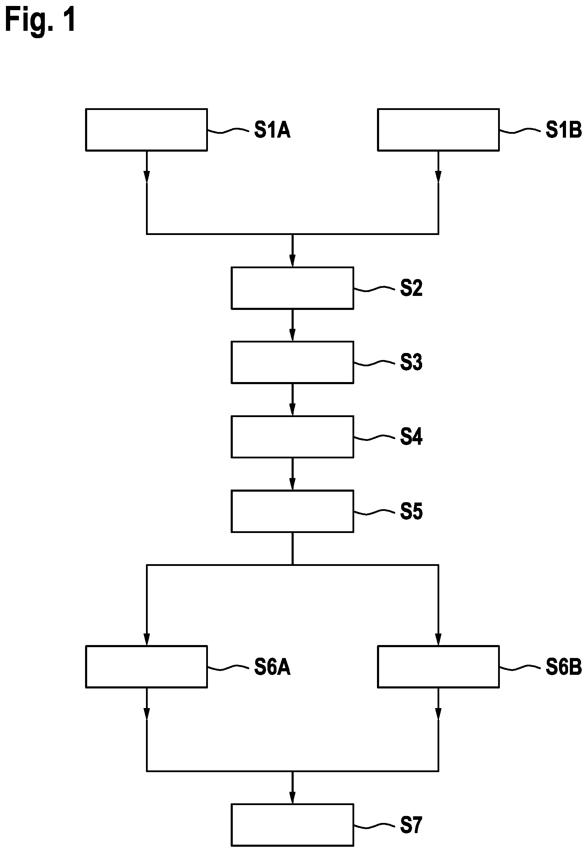

Fig. 1 zeigt ein Ablaufdiagramm eines Verfahrens zum Erzeugen einer virtuellen Fahrzeugumgebung zum Testen hochautomatisierter Fahrfunktionen eines Kraftfahrzeugs gemäß einer bevorzugten Ausführungsform der Erfindung.

Das Verfahren umfasst ein Empfangen S1A, S1B der vorerfassten Videobilddaten 10a, Radardaten und/oder der Lidarpunktwolke der realen Fahrzeugumgebung U1 einschließlich einer Vielzahl vorab gekennzeichneter S1a oder nachfolgend durch Anwenden zumindest eines ersten Algorithmus maschinellen Lernens A1 gekennzeichneter S1W, realer Objekte 12a, 12b, 12c, 12d, 12e.

Das Verfahren umfasst des Weiteren ein Erzeugen S2 eines ein jeweiliges reales Objekt 12a, 12b, 12c, 12d, 12e repräsentierenden ersten Merkmalsvektors M1 durch Anwenden eines zweiten Algorithmus maschinellen Lernens A2 auf das jeweilige reale Objekt 12a, 12b, 12c, 12d, 12e und Speichern S3 des ersten Merkmalsvektors M1.

Das Verfahren umfasst ferner ein Bereitstellen S4 einer Vielzahl gespeicherter, zweiter Merkmalsvektoren M2, welche synthetisch generierte Objekte 14a, 14b, 14c, 14d, 14e repräsentieren sowie ein Identifizieren S5 eines ein größtes Ähnlichkeitsmaß MA zum ersten Merkmalsvektor M1 aufweisenden zweiten Merkmalsvektors M2.

Ferner umfasst das Verfahren ein Selektieren S6A des identifizierten zweiten Merkmalsvektors M2 zum Erzeugen eines dem realen Objekt 12a, 12b, 12c, 12d, 12e entsprechenden synthetischen Objekts 14a, 14b, 14c, 14d, 14e.

Alternativ hierzu erfolgt ein prozedurales Generieren S6B des dem realen Objekt 12a, 12b, 12c, 12d entsprechenden synthetischen Objekts 14a, 14b, 14c, 14d.

Die Auswahl des Schrittes S6A oder S6B erfolgt in Abhängigkeit des identifizierten Ähnlichkeitsmaßes MA. Anschließend erfolgt ein Integrieren S7 des synthetischen Objekts 14a, 14b, 14c, 14d, 14e in eine vorgegebene virtuelle Fahrzeugumgebung U2.

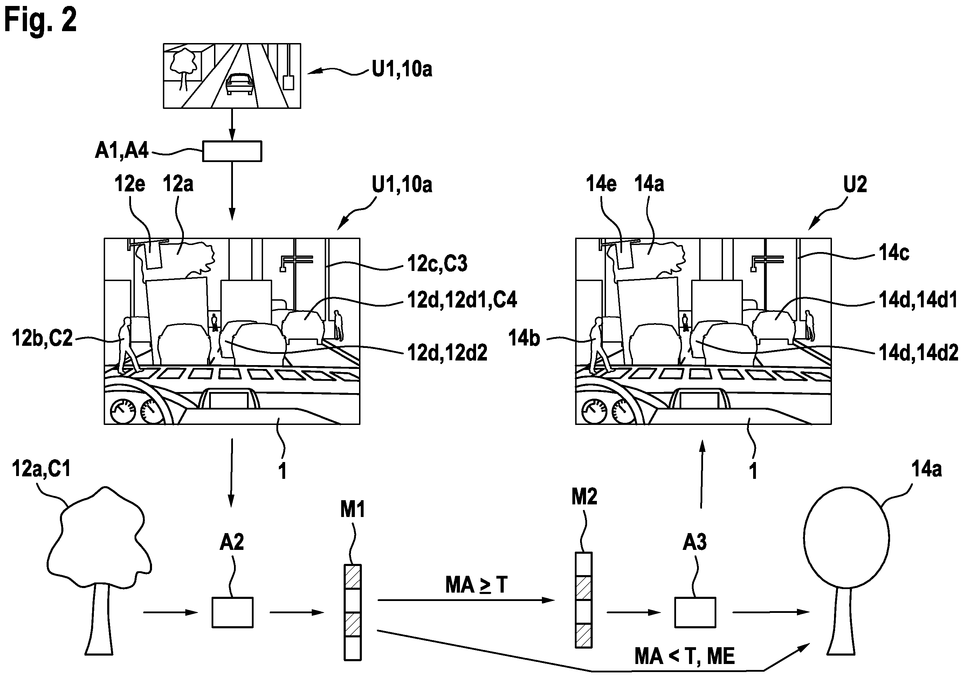

Fig. 2 zeigt ein schematisches Diagramm der Anwendung des Verfahrens auf eine reale Fahrzeugumgebung zum Erzeugen der virtuellen Fahrzeugumgebung gemäß der bevorzugten Ausführungsform der Erfindung.

Im vorliegend dargestellten Ausführungsbeispiel werden sowohl in der virtuellen Fahrzeugumgebung U2 als auch in der realen Fahrzeugumgebung U1 jeweils Videobilddaten eingesetzt.

Alternativ oder zusätzlich können beispielsweise Radardaten und/oder eine Lidarpunktwolke einer realen Fahrzeugumgebung zum Erzeugen der virtuellen Fahrzeugumgebung herangezogen werden.

Die vorerfassten Videobilddaten 10a werden zunächst durch Anwenden eines ersten Algorithmus maschinellen Lernens A1 gekennzeichnet.

Das Kennzeichnen umfasst ein Detektieren und Klassifizieren der Vielzahl realer Objekte 12a, 12b, 12c, 12d, 12e durch den ersten Algorithmus maschinellen Lernens A1.

Der erste Algorithmus maschinellen Lernens A1 ist in der vorliegenden Ausführungsform durch einen Algorithmus überwachten Lernens, insbesondere ein künstliches neuronales Netz, gebildet.

Alternativ kann der erste Algorithmus maschinellen Lernens A1 beispielsweise durch einen Algorithmus unüberwachten Lernens, insbesondere ein künstliches neuronales Netz, gebildet sein. Durch den ersten Algorithmus maschinellen Lernens A1 werden die in den Videobilddaten 10a enthaltenen realen Objekte 12a, 12b, 12c, 12d in Hauptklassen C1, C2, C3, C4 klassifiziert.

Die einer Hauptklasse C1, C2, C3, C4 zugeordneten realen Objekte 12a, 12b, 12c, 12d werden durch Anwenden eines vierten Algorithmus maschinellen Lernens A4 ferner in Unterklassen 12d1, 12d2 klassifiziert.

Das Objekt 12a ist im vorliegenden Ausführungsbeispiel ein Baum, das Objekt 12b eine Fußgängerin, das Objekt 12c eine Straßenlaterne, die Mehrzahl von Objekten 12d unterschiedliche Fahrzeuge und das Objekt 12e ein Verkehrszeichen.

Die vorstehend genannten Objekte entsprechen somit jeweiligen Hauptklassen. Unterklassen sind durch Unterarten der Objekte wie beispielsweise unterschiedliche Baumarten und/oder unterschiedliche Arten von Fußgängern selektiert nach Geschlecht, Alter und sonstigen klassifizierbaren Merkmalen definiert.

Eine Besonderheit stellt hierbei das Verkehrszeichen 12e dar, da dieses im vorliegenden Ausführungsbeispiel weder durch Zuordnung eines zweiten Merkmalsvektors zu einem ersten Merkmalsvektor erzeugt noch prozedural generiert wird, sondern aus sonstigen Datenquellen bzw. durch sonstige Verfahren erzeugt wird, da es hier auf eine exakte, detailgetreue Wiedergabe der Verkehrszeicheninformation ankommt.

Alternativ können Verkehrszeichen beispielsweise bei ausreichend hoher Übereinstimmung eines ersten Merkmalsvektors mit einem entsprechenden zweiten Merkmalsvektor beispielsweise durch ein in einem Datenspeicher hinterlegten synthetischen Objekt generiert werden.

Aus der realen Fahrzeugumgebung U1 werden sodann die darin enthaltenen realen Objekte 12a, 12b, 12c, 12d selektiert und durch Anwenden des zweiten Algorithmus maschinellen Lernens A2 auf das jeweilige reale Objekt 12a, 12b, 12c, 12d ein das jeweilige reale Objekt 12a, 12b, 12c, 12d repräsentierender erster Merkmalsvektor M1 erzeugt.

Dieses Verfahren wird für sämtliche der in der realen Fahrzeugumgebung U1 enthaltenen Objekte 12a, 12b, 12c, 12d durchgeführt.

Ferner wird für jeden der so erzeugten ersten Merkmalsvektoren M1, die in einem entsprechenden Datenspeicher gespeichert sind, ein Vergleich mit bzw. eine Zuordnung zu einem zweiten Merkmalsvektor M2 vorgenommen.

Hierfür wird eine Vielzahl gespeicherter, zweiter Merkmalsvektoren M2 bereitgestellt, welche synthetisch generierte Objekte 14a, 14b, 14c, 14d repräsentieren. Hierfür wird ein ein größtes Ähnlichkeitsmaß MA zum ersten Merkmalsvektor M1 aufweisender zweiter Merkmalsvektor M2 identifiziert.

Falls das Ähnlichkeitsmaß MA des identifizierten zweiten Merkmalsvektors M2 zum ersten Merkmalsvektor M1 größer oder gleich einem vorgegebenen Schwellwert T ist, wird der identifizierte zweite Merkmalsvektor M2 selektiert.

Anschließend oder dadurch bedingt wird ein gespeichertes, dem zweiten Merkmalsvektor M2 zugeordnetes synthetisches Objekt 14a, 14b, 14c, 14d, 14e, welches dem realen Objekt 12a, 12b, 12c, 12d, 12e entspricht, aus einem Datenspeicher aufgerufen.

Zuvor bzw. vorab wurde der ein jeweiliges synthetisches Objekt 14a, 14b, 14c, 14d, 14e repräsentierende zweite Merkmalsvektor M2 durch Anwenden eines dritten Algorithmus maschinellen Lernens A3 auf das jeweilige synthetische Objekt 14a, 14b, 14c, 14d, 14e erzeugt und in dem Datenspeicher gespeichert S3.

Falls das Ähnlichkeitsmaß MA des identifizierten zweiten Merkmalsvektors M2 zum ersten Merkmalsvektor M1 kleiner dem vorgegebenen Schwellwert T ist, wird das synthetische Objekt 14a, 14b, 14c, 14d prozedural generiert.

Das prozedurale Generieren kann beispielsweise durch eine hierfür verwendbare Softwareapplikation wie beispielsweise die Unreal Engine durchgeführt werden. Das prozedurale Generieren des synthetischen Objekts 14a, 14b, 14c, 14d wird unter Verwendung des durch den zweiten Algorithmus maschinellen Lernens A2 erzeugten ersten Merkmalsvektor M1 durchgeführt.

Der zweite Algorithmus maschinellen Lernens A2 zum Erzeugen, insbesondere zum Kodieren, des ersten Merkmalsvektors M1 ist in der vorliegenden Ausführungsform durch einen ersten variational Autoencoder gebildet.

Das Objekt 14e, welches durch ein Verkehrszeichen gebildet wird, wird in der vorliegenden Ausführungsform durch ein sonstiges geeignetes Verfahren aus dem in der realen Fahrzeugumgebung U1 enthaltenen Verkehrszeichen 12e generiert.

Bei Gleichartigkeit, insbesondere einer gleichartigen Datenstruktur, des ersten Merkmalsvektors M1 und des zweiten Merkmalsvektors M2 zum Identifizieren des Ähnlichkeitsmaßes MA wird wie in der vorliegenden Ausführungsform dargestellt ein direkter Vergleich zwischen dem ersten Merkmalsvektor M1 und der Vielzahl zweiter Merkmalsvektoren M2 durchgeführt.

Bei Verschiedenartigkeit, insbesondere einer verschiedenartigen Datenstruktur, des ersten Merkmalsvektors M1 und des zweiten Merkmalsvektors M2 kann alternativ ein eine Korrelation zwischen dem ersten Merkmalsvektor M1 und dem zweiten Merkmalsvektor M2 herstellender Klassifikator verwendet werden, um das Ähnlichkeitsmaß MA des zweiten Merkmalsvektors M2 zum ersten Merkmalsvektor M1 zu identifizieren.

Die Vielzahl gespeicherter, erster Merkmalsvektoren M1 und der zweiten Merkmalsvektoren M2 sind in der vorliegenden Ausführungsform durch 3-D Bilddaten gebildet.

Alternativ können die ersten Merkmalsvektoren M1 und die zweiten Merkmalsvektoren M2 beispielsweise durch 2-D Bilddaten, Radardaten und/oder eine Lidarpunktwolke repräsentiert werden.

Falls das Ähnlichkeitsmaß MA des identifizierten zweiten Merkmalsvektors M2 zum ersten Merkmalsvektor M1 kleiner dem vorgegebenen Schwellwert T ist, wird gemäß der vorliegenden Ausführungsform ferner eine Meldung ME erzeugt, dass die gespeicherte Vielzahl zweiter Merkmalsvektoren M2 kein ausreichendes Ähnlichkeitsmaß MA zum identifizierten ersten Merkmalsvektor M1 aufweisen.

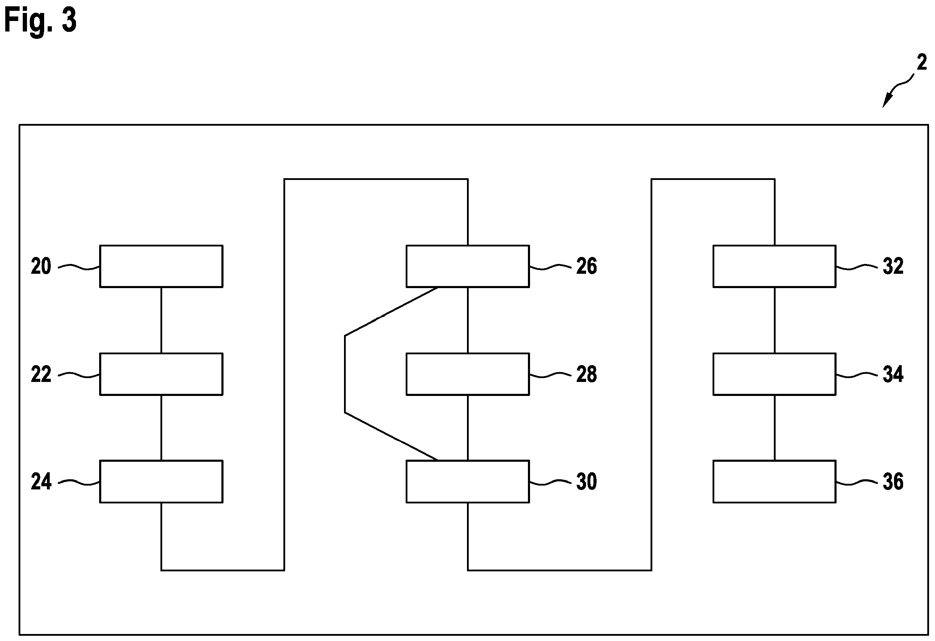

Fig. 3 zeigt ein Diagramm eines Systems zum Erzeugen der virtuellen Fahrzeugumgebung zum Testen hochautomatisierter Fahrfunktionen des Kraftfahrzeugs gemäß der bevorzugten Ausführungsform der Erfindung.

Das System 2 umfasst Mittel 20 zum Empfangen der vorerfassten Videobilddaten 10a, Radardaten und/oder der Lidarpunktwolke der realen Fahrzeugumgebung U1 einschließlich einer Vielzahl durch Anwenden zumindest eines ersten Algorithmus maschinellen Lernens A1 gekennzeichneter, realer Objekte 12a, 12b, 12c, 12d, 12e.

Alternativ können die realen Objekte 12a, 12b, 12c, 12d, 12e beispielsweise vorab gekennzeichnet sein.

Das System 2 umfasst ferner Mittel 22 zum Anwenden zumindest eines ersten Algorithmus maschinellen Lernens A1 auf die Videobilddaten 10a, die Radardaten und/oder die Lidarpunktwolke zum Detektieren und Klassifizieren der Vielzahl realer Objekte 12a, 12b, 12c, 12d, 12e.

Das System 2 umfasst des Weiteren Mittel 24 zum Erzeugen eines ein jeweiliges reales Objekt 12a, 12b, 12c, 12d, 12e repräsentierenden ersten Merkmalsvektors M1, welche Mittel 24 dazu eingerichtet sind, einen zweiten Algorithmus maschinellen Lernens A2 auf das jeweilige reale Objekt 12a, 12b, 12c, 12d, 12e anzuwenden und Mittel 26 zum Speichern des ersten Merkmalsvektors M1.

Das System 2 umfasst des Weiteren Mittel 28 zum Bereitstellen einer Vielzahl gespeicherter, zweiter Merkmalsvektoren M2, welche synthetisch generierte Objekte 14a, 14b, 14c, 14d, 14e repräsentieren.

Darüber hinaus umfasst das System 2 Mittel 30 zum Identifizieren eines ein größtes Ähnlichkeitsmaß MA zum ersten Merkmalsvektor M1 aufweisenden zweiten Merkmalsvektors M2.

Ferner umfasst das System 2 Mittel 32 zum Selektieren S6A des identifizierten zweiten Merkmalsvektors M2 und Aufrufen eines gespeicherten, dem zweiten Merkmalsvektor M2 zugeordneten synthetischen Objekts 14a, 14b, 14c, 14d, 14e, welches dem realen Objekt 12a, 12b, 12c, 12d, 12e entspricht und Mittel 34 zum prozeduralen Generieren des dem realen Objekt 12a, 12b, 12c, 12d, 12e entsprechenden synthetischen Objekts 14a, 14b, 14c, 14d, 14e.

Die Mittel 32 zum Selektieren S6A des identifizierten zweiten Merkmalsvektors M2 und Aufrufen eines gespeicherten, dem zweiten Merkmalsvektor M2 zugeordneten synthetischen Objekts 14a, 14b, 14c, 14d, 14e oder die Mittel 34 zum prozeduralen Generieren des dem realen Objekt 12a, 12b, 12c, 12d, 12e entsprechenden synthetischen Objekts 14a, 14b, 14c, 14d, 14e werden in Abhängigkeit des identifizierten Ähnlichkeitsmaßes MA eingesetzt.

Darüber hinaus umfasst das System 2 Mittel 36 zum Integrieren des synthetischen Objekts 14a, 14b, 14c, 14d, 14e in eine vorgegebene virtuelle Fahrzeugumgebung U2. Die Mittel 30 zum Identifizieren eines ein größtes Ähnlichkeitsmaß MA zum ersten Merkmalsvektor M1 aufweisenden zweiten Merkmalsvektors M2 weisen eine Verbindung zu sowohl den Mitteln 26 zum Speichern des ersten Merkmalsvektors M1 als auch den Mitteln 28 zum Bereitstellen einer Vielzahl gespeicherter, zweiter Merkmalsvektoren M2, welche synthetisch generierte Objekte 14a, 14b, 14c, 14d, 14e repräsentieren, auf.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

## Patentansprüche

1. Computerimplementiertes Verfahren zum Erzeugen einer virtuellen Fahrzeugumgebung (U2) zum Testen hochautomatisierter Fahrfunktionen eines Kraftfahrzeugs (1) unter Verwendung vorerfasster Videobilddaten (10a), Radardaten und/oder einer Lidarpunktwolke einer realen Fahrzeugumgebung (U1), mit den Schritten:
Empfangen (S1A, S1B) der vorerfassten Videobilddaten (10a), Radardaten und/oder der Lidarpunktwolke der realen Fahrzeugumgebung (U1) einschließlich einer Vielzahl vorab gekennzeichneter (S1A) oder nachfolgend durch Anwenden zumindest eines ersten Algorithmus maschinellen Lernens (A1) gekennzeichneter (S1B), realer Objekte (12a, 12b, 12c, 12d, 12e);
Erzeugen (S2) eines ein jeweiliges reales Objekt (12a, 12b, 12c, 12d, 12e) repräsentierenden ersten
Merkmalsvektors (M1) durch Anwenden eines zweiten Algorithmus maschinellen Lernens (A2) auf das jeweilige reale Objekt (12a, 12b, 12c, 12d, 12e) und Speichern (S3) des ersten Merkmalsvektors (M1);
Bereitstellen (S4) einer Vielzahl gespeicherter, zweiter Merkmalsvektoren (M2), welche synthetisch generierte Objekte (14a, 14b, 14c, 14d, 14e) repräsentieren;
Identifizieren (S5) eines ein größtes Ähnlichkeitsmaß (MA) zum ersten Merkmalsvektor (M1) aufweisenden zweiten Merkmalsvektors (M2);
Selektieren (S6A) des identifizierten zweiten Merkmalsvektors (M2) und Aufrufen eines gespeicherten, dem zweiten Merkmalsvektor (M2) zugeordneten synthetischen Objekts (14a, 14b, 14c, 14d, 14e), welches dem realen Objekt (12a, 12b, 12c, 12d, 12e) entspricht oder prozedurales Generieren (S6B) des dem realen Objekt (12a, 12b, 12c, 12d, 12e) entsprechenden synthetischen Objekts (14a, 14b, 14c, 14d, 14e) in Abhängigkeit des identifizierten Ähnlichkeitsmaßes (MA); und
Integrieren (S7) des synthetischen Objekts (14a, 14b, 14c, 14d, 14e) in eine vorgegebene virtuelle Fahrzeugumgebung (U2), wobei die virtuelle Fahrzeugumgebung eine computergenerierte Repräsentation der sensorbasiert erfassten realen Fahrzeugumgebung ist, wobei falls das Ähnlichkeitsmaß (MA) des identifizierten zweiten Merkmalsvektors (M2) zum ersten Merkmalsvektor (M1) größer oder gleich einem vorgegebenen Schwellwert (T) ist, der identifizierte zweite Merkmalsvektor (M2) selektiert wird und das gespeicherte, dem zweiten Merkmalsvektor (M2) zugeordnete synthetische Objekt (14a, 14b, 14c, 14d, 14e), welches dem realen Objekt (12a, 12b, 12c, 12d, 12e) entspricht, aufgerufen (S6A) wird, und
wobei falls das Ähnlichkeitsmaß (MA) des identifizierten zweiten Merkmalsvektors (M2) zum ersten Merkmalsvektor (M1) kleiner einem vorgegebenen Schwellwert (T) ist, das synthetische Objekt (14a, 14b, 14c, 14d, 14e) prozedural generiert wird (S6B).

2. Computerimplementiertes Verfahren nach Anspruch 1, **dadurch gekennzeichnet, dass** das Kennzeichnen (S1A, S1B), insbesondere ein Detektieren und Klassifizieren, der Vielzahl realer Objekte (12a, 12b, 12c, 12d, 12e) durch einen Algorithmus überwachten Lernens oder durch einen Algorithmus unüberwachten Lernens, insbesondere ein künstliches neuronales Netz, durchgeführt wird.

3. Computerimplementiertes Verfahren nach Anspruch 2, **dadurch gekennzeichnet, dass** das prozedurale Generieren (S6B) des synthetischen Objekts (14a, 14b, 14c, 14d, 14e) unter Verwendung des durch den zweiten Algorithmus maschinellen Lernens (A2) erzeugten ersten Merkmalsvektor (M1) durchgeführt wird.

4. Computerimplementiertes Verfahren nach einem der vorhergehenden Ansprüche, **dadurch gekennzeichnet, dass** der zweite Algorithmus maschinellen Lernens (A2) zum Erzeugen, insbesondere zum Kodieren, des ersten Merkmalsvektors (M1) durch einen ersten variational Autoencoder gebildet ist.

5. Computerimplementiertes Verfahren nach einem der vorhergehenden Ansprüche, **dadurch gekennzeichnet, dass** der ein jeweiliges synthetisches Objekt (14a, 14b, 14c, 14d, 14e) repräsentierende zweite Merkmalsvektor (M2) durch Anwenden eines dritten Algorithmus maschinellen Lernens (A3) auf das jeweilige synthetische Objekt (14a, 14b, 14c, 14d, 14e) erzeugt wird, und wobei der zweite Merkmalsvektor (M2) in einem Datenspeicher gespeichert wird (S3).

6. Computerimplementiertes Verfahren nach einem der vorhergehenden Ansprüche, **dadurch gekennzeichnet, dass** durch den ersten Algorithmus maschinellen Lernens (A1) die in den Videobilddaten (10a), den Radardaten und/oder der Lidarpunktwolke enthaltenen realen Objekte (12a, 12b, 12c, 12d) in Hauptklassen (C1, C2, C3, C4) klassifiziert werden, wobei die einer Hauptklasse (C1, C2, C3, C4) zugeordneten realen Objekte (12a, 12b, 12c, 12d) durch Anwenden eines vierten Algorithmus maschinellen Lernens (A4) in Unterklassen (12d1, 12d2) klassifiziert werden.

7. Computerimplementiertes Verfahren nach einem der vorhergehenden Ansprüche, **dadurch gekennzeichnet, dass** bei Gleichartigkeit, insbesondere einer gleichartigen Datenstruktur, des ersten Merkmalsvektors (M1) und des zweiten Merkmalsvektors (M2) zum Identifizieren des Ähnlichkeitsmaßes (MA) ein direkter Vergleich zwischen dem ersten Merkmalsvektor (M1) und der Vielzahl zweiter Merkmalsvektoren (M2) durchgeführt wird.

8. Computerimplementiertes Verfahren nach einem der vorhergehenden Ansprüche, **dadurch gekennzeichnet, dass** bei Verschiedenartigkeit, insbesondere einer verschiedenartigen Datenstruktur, des ersten Merkmalsvektors (M1) und des zweiten Merkmalsvektors (M2) ein eine Korrelation zwischen dem ersten Merkmalsvektor (M1) und dem zweiten Merkmalsvektor (M2) herstellender Klassifikator verwendet wird, um das Ähnlichkeitsmaß (MA) des zweiten Merkmalsvektors (M2) zum ersten Merkmalsvektor (M1) zu identifizieren.

9. Computerimplementiertes Verfahren nach einem der vorhergehenden Ansprüche, durch gekennzeichnet, dass die Vielzahl gespeicherter, erster Merkmalsvektoren (M1) und/oder zweiter Merkmalsvektoren (M2), 2-D Bilddaten, 3-D Bilddaten, Radardaten und/oder eine Lidarpunktwolke repräsentieren.

10. Computerimplementiertes Verfahren nach einem der Ansprüche 3 bis 9, durch gekennzeichnet, dass falls das Ähnlichkeitsmaß (MA) des identifizierten zweiten Merkmalsvektors (M2) zum ersten Merkmalsvektor (M1) kleiner dem vorgegebenen Schwellwert (T) ist, eine Meldung (ME) erzeugt wird, dass die gespeicherte Vielzahl zweiter Merkmalsvektoren (M2) kein ausreichendes Ähnlichkeitsmaß (MA) zum identifizierten ersten Merkmalsvektor (M1) aufweisen.

11. System (2) zum Erzeugen einer virtuellen Fahrzeugumgebung (U2) zum Testen hochautomatisierter Fahrfunktionen eines Kraftfahrzeugs unter Verwendung vorerfasster Videobilddaten (10a), Radardaten und/oder einer Lidarpunktwolke einer realen Fahrzeugumgebung (U1), umfassend:
Mittel (20) zum Empfangen der vorerfassten Videobilddaten (10a), Radardaten und/oder der Lidarpunktwolke der realen Fahrzeugumgebung (U1) einschließlich einer Vielzahl vorab gekennzeichneter oder nachfolgend durch Anwenden zumindest eines ersten Algorithmus maschinellen Lernens (A1) gekennzeichneter, realer Objekte (12a, 12b, 12c, 12d, 12e);
Mittel (22) zum Anwenden zumindest eines ersten Algorithmus maschinellen Lernens (A1) auf die Videobilddaten (10a), die Radardaten und/oder die Lidarpunktwolke zum Detektieren und Klassifizieren der Vielzahl realer Objekte (12a, 12b, 12c, 12d, 12e);
Mittel (24) zum Erzeugen eines ein jeweiliges reales Objekt (12a, 12b, 12c, 12d, 12e) repräsentierenden ersten Merkmalsvektors (M1), welche Mittel (24) dazu eingerichtet sind, einen zweiten Algorithmus maschinellen Lernens (A2) auf das jeweilige reale Objekt (12a, 12b, 12c, 12d, 12e) anzuwenden und Mittel (26) zum Speichern des ersten Merkmalsvektors (M1);
Mittel (28) zum Bereitstellen einer Vielzahl gespeicherter, zweiter Merkmalsvektoren (M2), welche synthetisch generierte Objekte (14a, 14b, 14c, 14d, 14e) repräsentieren;
Mittel (30) zum Identifizieren eines ein größtes Ähnlichkeitsmaß (MA) zum ersten Merkmalsvektor (M1) aufweisenden zweiten Merkmalsvektors (M2);
Mittel (32) zum Selektieren (S6A) des identifizierten zweiten Merkmalsvektors (M2) und Aufrufen eines gespeicherten, dem zweiten Merkmalsvektor (M2) zugeordneten synthetischen Objekts (14a, 14b, 14c, 14d, 14e), welches dem realen Objekt (12a, 12b, 12c, 12d, 12e) entspricht und Mittel (34) zum prozeduralen Generieren des dem realen Objekt (12a, 12b, 12c, 12d, 12e) entsprechenden synthetischen Objekts (14a, 14b, 14c, 14d, 14e), wobei die Mittel (32) zum Selektieren (S6A) des identifizierten zweiten Merkmalsvektors (M2) und Aufrufen eines gespeicherten, dem zweiten Merkmalsvektor (M2) zugeordneten synthetischen Objekts (14a, 14b, 14c, 14d, 14e) oder die Mittel (34) zum prozeduralen Generieren des dem realen Objekt (12a, 12b, 12c, 12d, 12e) entsprechenden synthetischen Objekts (14a, 14b, 14c, 14d, 14e) in Abhängigkeit des identifizierten Ähnlichkeitsmaßes (MA) eingesetzt werden; und
Mittel (36) zum Integrieren des synthetischen Objekts (14a, 14b, 14c, 14d, 14e) in eine vorgegebene virtuelle Fahrzeugumgebung (U2), wobei die virtuelle Fahrzeugumgebung eine computergenerierte Repräsentation der sensorbasiert erfassten realen Fahrzeugumgebung ist,
wobei falls das Ähnlichkeitsmaß (MA) des identifizierten zweiten Merkmalsvektors (M2) zum ersten Merkmalsvektor (M1) größer oder gleich einem vorgegebenen Schwellwert (T) ist, der identifizierte zweite Merkmalsvektor (M2) selektiert wird und das gespeicherte, dem zweiten Merkmalsvektor (M2) zugeordnete synthetische Objekt (14a, 14b, 14c, 14d, 14e), welches dem realen Objekt (12a, 12b, 12c, 12d, 12e) entspricht, aufgerufen (S6A) wird,
und wobei falls das Ähnlichkeitsmaß (MA) des identifizierten zweiten Merkmalsvektors (M2) zum ersten Merkmalsvektor (M1) kleiner einem vorgegebenen Schwellwert (T) ist, das synthetische Objekt (14a, 14b, 14c, 14d, 14e) prozedural generiert wird (S6B).

12. Computerprogramm mit Programmcode, um das Verfahren nach einem der Ansprüche 1 bis 10 durchzuführen, wenn das Computerprogramm auf einem Computer ausgeführt wird.

13. Computerlesbarer Datenträger mit Programmcode eines Computerprogramms, um das Verfahren nach einem der Ansprüche 1 bis 10 durchzuführen, wenn das Computerprogramm auf einem Computer ausgeführt wird.

## Claims

1. A computer-implemented method for generating a virtual vehicle environment (U2) for testing highly automated driving functions of a motor vehicle (1) using pre-captured video image data (10a), radar data, and/or a lidar point cloud of a real vehicle environment (U1), comprising the steps of:
receiving (S1A, S1B) the pre-captured video image data (10a), radar data, and/or the lidar point cloud of the real vehicle environment (U1) including a plurality of real objects (12a, 12b, 12c, 12d, 12e) identified in advance (S1A) or subsequently (S1B) by applying at least one first machine learning algorithm (A1);
generating (S2) a first feature vector (M1) representing a respective real object (12a, 12b, 12c, 12d, 12e) by applying a second machine learning algorithm (A2) to the respective real object (12a, 12b, 12c, 12d, 12e) and storing (S3) the first feature vector (M1);
providing (S4) a plurality of stored second feature vectors (M2) representing synthetically generated objects (14a, 14b, 14c, 14d, 14e);
identifying (S5) a second feature vector (M2) having a greatest similarity measure (MA) to the first feature vector (M1);
selecting (S6A) the identified second feature vector (M2) and calling a stored synthetic object (14a, 14b, 14c, 14d, 14e) associated with the second feature vector (M2) and corresponding to the real object (12a, 12b, 12c, 12d, 12e) or procedurally generating (S6B) the synthetic object (14a, 14b, 14c, 14d, 14e) corresponding to the real object (12a, 12b, 12c, 12d, 12e) as a function of the identified similarity measure (MA); and
integrating (S7) the synthetic object (14a, 14b, 14c, 14d, 14e) into a specified virtual vehicle environment (U2), the virtual vehicle environment being a computer-generated representation of the real vehicle environment captured by sensors, wherein if the similarity measure (MA) of the identified second feature vector (M2) to the first feature vector (M1) is greater than or equal to a specified threshold value (T), then the identified second feature vector (M2) is selected and the stored synthetic object (14a, 14b, 14c, 14d, 14e) associated with the second feature vector (M2) and corresponding to the real object (12a, 12b, 12c, 12d, 12e) is called (S6A), and wherein if the similarity measure (MA) of the identified second feature vector (M2) to the first feature vector (M1) is less than a specified threshold value (T), then the synthetic object (14a, 14b, 14c, 14d, 14e) is procedurally generated (S6B).

2. The computer-implemented method according to claim 1, **characterized in that** the identifying (S1A, S1B), in particular detecting and classifying, of the plurality of real objects (12a, 12b, 12c, 12d, 12e) is carried out by a supervised learning algorithm or by an unsupervised learning algorithm, in particular an artificial neural network.

3. The computer-implemented method according to claim 2, **characterized in that** the procedural generation (S6B) of the synthetic object (14a, 14b, 14c, 14d, 14e) is carried out using the first feature vector (M1) generated by the second machine learning algorithm (A2).

4. The computer-implemented method according to any one of the preceding claims, **characterized in that** the second machine learning algorithm (A2) for generating, in particular for encoding, the first feature vector (M1) is formed by a first variational autoencoder.

5. The computer-implemented method according to any one of the preceding claims, **characterized in that** the second feature vector (M2) representing a respective synthetic object (14a, 14b, 14c, 14d, 14e) is generated by applying a third machine learning algorithm (A3) to the respective synthetic object (14a, 14b, 14c, 14d, 14e), and wherein the second feature vector (M2) is stored (S3) in a data memory.

6. The computer-implemented method according to any one of the preceding claims, **characterized in that** the first machine learning algorithm (A1) classifies the real objects (12a, 12b, 12c, 12d) present in the video image data (10a), the radar data, and/or the lidar point cloud into main classes (C1, C2, C3, C4), wherein the real objects (12a, 12b, 12c, 12d) associated with a main class (C1, C2, C3, C4) are classified into subclasses (12d1, 12d2) by applying a fourth machine learning algorithm (A4).

7. The computer-implemented method according to any one of the preceding claims, **characterized in that** if the first feature vector (M1) and the second feature vector (M2) are of the same type, in particular have the same data structure, then a direct comparison is carried out between the first feature vector (M1) and the plurality of second feature vectors (M2) in order to identify the similarity measure (MA).

8. The computer-implemented method according to any one of the preceding claims, **characterized in that** if the first feature vector (M1) and the second feature vector (M2) are of different types, in particular have a different type of data structure, then a classifier establishing a correlation between the first feature vector (M1) and the second feature vector (M2) is used to identify the similarity measure (MA) of the second feature vector (M2) to the first feature vector (M1).

9. The computer-implemented method according to any one of the preceding claims, **characterized in that** the plurality of stored first feature vectors (M1) and/or second feature vectors (M2) represent 2-D image data, 3-D image data, radar data, and/or a lidar point cloud.

10. The computer-implemented method according to any one of claims 3 to 9, **characterized in that** if the similarity measure (MA) of the identified second feature vector (M2) to the first feature vector (M1) is less than the specified threshold value (T), a message (ME) is generated that the stored plurality of second feature vectors (M2) do not have a sufficient similarity measure (MA) to the identified first feature vector (M1).

11. A system (2) for generating a virtual vehicle environment (U2) for testing highly automated driving functions of a motor vehicle using pre-captured video image data (10a), radar data, and/or a lidar point cloud of a real vehicle environment (U1), comprising:
means (20) for receiving the pre-captured video image data (10a), radar data, and/or the lidar point cloud of the real vehicle environment (U1) including a plurality of real objects (12a, 12b, 12c, 12d, 12e) identified in advance or subsequently by applying at least one first machine learning algorithm (A1);
means (22) for applying at least one first machine learning algorithm (A1) to the video image data (10a), the radar data, and/or the lidar point cloud for detecting and classifying the plurality of real objects (12a, 12b, 12c, 12d, 12e);
means (24) for generating a first feature vector (M1) representing a respective real object (12a, 12b, 12c, 12d, 12e), said means (24) being configured to apply a second machine learning algorithm (A2) to the respective real object (12a, 12b, 12c, 12d, 12e), and means (26) for storing the first feature vector (M1);
means (28) for providing a plurality of stored second feature vectors (M2) representing synthetically generated objects (14a, 14b, 14c, 14d, 14e);
means (30) for identifying a second feature vector (M2) having a greatest similarity measure (MA) to the first feature vector (M1);
means (32) for selecting (S6A) the identified second feature vector (M2) and for calling a stored synthetic object (14a, 14b, 14c, 14d, 14e) associated with the second feature vector (M2) and corresponding to the real object (12a, 12b, 12c, 12d, 12e), and means (34) for procedurally generating the synthetic object (14a, 14b, 14c, 14d, 14e) corresponding to the real object (12a, 12b, 12c, 12d, 12e), wherein the means (32) for selecting (S6A) the identified second feature vector (M2) and for calling a stored synthetic object (14a, 14b, 14c, 14d, 14e) associated with the second feature vector (M2) or the means (34) for procedurally generating the synthetic object (14a, 14b, 14c, 14d, 14e) corresponding to the real object (12a, 12b, 12c, 12d, 12e) are used as a function of the identified similarity measure (MA); and
means (36) for integrating the synthetic object (14a, 14b, 14c, 14d, 14e) into a specified virtual vehicle environment (U2), wherein the virtual vehicle environment is a computer-generated representation of the real vehicle environment captured by sensors,
wherein if the similarity measure (MA) of the identified second feature vector (M2) to the first feature vector (M1) is greater than or equal to a specified threshold value (T), then the identified second feature vector (M2) is selected and the stored synthetic object (14a, 14b, 14c, 14d, 14e) associated with the second feature vector (M2) and corresponding to the real object (12a, 12b, 12c, 12d, 12e) is called (S6A),
and wherein if the similarity measure (MA) of the identified second feature vector (M2) to the first feature vector (M1) is less than a specified threshold value (T), then the synthetic object (14a, 14b, 14c, 14d, 14e) is procedurally generated (S6B).

12. A computer program having program code for performing the method according to any one of the claims 1 through 10 when the computer program is executed on a computer.

13. A computer-readable data storage medium having program code of a computer program for performing the method according to any one of the claims 1 through 10 when the computer program is executed on a computer.

## Revendications

1. Procédé mis en œuvre par ordinateur pour générer un environnement de véhicule virtuel (U2) destiné à tester des fonctions de conduite hautement automatisées d'un véhicule à moteur (1) en utilisant des données d'images vidéo (10a), des données radar et/ou un nuage de points LiDAR préalablement acquis d'un environnement de véhicule réel (U1), comprenant les étapes suivantes:
réception (S1A, S1B) des données d'images vidéo (10a), des données radar et/ou du nuage de points LiDAR préalablement acquis de l'environnement de véhicule réel (U1), y compris une pluralité d'objets réels (12a, 12b, 12c, 12d, 12e) marqués au préalable (S1A) ou marqués par la suite (S1B) par utilisation d'au moins un premier algorithme d'apprentissage automatique (A1);
génération (S2) d'un premier vecteur de caractéristiques (M1) représentant un objet réel respectif (12a, 12b, 12c, 12d, 12e) par application d'un deuxième algorithme d'apprentissage automatique (A2) à l'objet réel respectif (12a, 12b, 12c, 12d, 12e) et par mémorisation (S3) du premier vecteur de caractéristiques (M1);
fourniture (S4) d'une pluralité de deuxièmes vecteurs de caractéristiques (M2) mémorisés, lesquels représentent des objets générés de manière synthétique (14a, 14b, 14c, 14d, 14e);
identification (S5) d'un deuxième vecteur de caractéristiques (M2) présentant un degré de similitude (MA) le plus élevé avec le premier vecteur de caractéristiques (M1);
sélection (S6A) du deuxième vecteur de caractéristiques (M2) identifié et appel d'un objet synthétique (14a, 14b, 14c, 14d, 14e) mémorisé, associé au deuxième vecteur de caractéristiques (M2), lequel correspond à l'objet réel (12a, 12b, 12c, 12d, 12e) ou génération procédurale (S6B) de l'objet synthétique (14a, 14b, 14c, 14d, 14e) correspondant à l'objet réel (12a, 12b, 12c, 12d, 12e) en fonction du degré de similitude (MA) identifié; et
intégration (S7) de l'objet synthétique (14a, 14b, 14c, 14d, 14e) dans un environnement de véhicule virtuel (U2) prédéterminé, l'environnement de véhicule virtuel étant une représentation générée par ordinateur de l'environnement de véhicule réel détecté à base de capteurs, le deuxième vecteur de caractéristiques (M2) identifié étant sélectionné et l'objet synthétique (14a, 14b, 14c, 14d, 14e) mémorisé, associé au deuxième vecteur de caractéristiques (M2), qui correspond à l'objet réel (12a, 12b, 12c, 12d, 12e), étant appelé (S6A) dans le cas où le degré de similitude (MA) du deuxième vecteur de caractéristiques identifié (M2) avec le premier vecteur de caractéristiques (M1) est supérieur ou égal à une valeur seuil prédéterminée (T), et l'objet synthétique (14a, 14b, 14c, 14d, 14e) étant généré de manière procédurale (S6B) dans le cas où le degré de similitude (MA) du deuxième vecteur de caractéristiques identifié (M2) avec le premier vecteur de caractéristiques (M1) est inférieur à une valeur seuil prédéterminée (T).

2. Procédé mis en œuvre par ordinateur selon la revendication 1, **caractérisé en ce que** le marquage (S1A, S1B), en particulier une détection et une classification, de la pluralité d'objets réels (12a, 12b, 12c, 12d, 12e) est effectuée par un algorithme d'apprentissage supervisé ou par un algorithme d'apprentissage non supervisé, en particulier un réseau neuronal artificiel.

3. Procédé mis en œuvre par ordinateur selon la revendication 2 **caractérisé en ce que** la génération procédurale (S6B) de l'objet synthétique (14a, 14b, 14c, 14d, 14e) est effectuée par utilisation du premier vecteur de caractéristiques (M1) généré par le deuxième algorithme d'apprentissage automatique (A2).

4. Procédé mis en œuvre par ordinateur selon l'une des revendications précédentes, **caractérisé en ce que** le deuxième algorithme d'apprentissage automatique (A2) destiné à générer, en particulier à coder, le premier vecteur de caractéristiques (M1), est formé par un premier autoencodeur variationnel.

5. Procédé mis en œuvre par ordinateur selon l'une des revendications précédentes, **caractérisé en ce que** le deuxième vecteur de caractéristiques (M2) représentant un objet synthétique (14a, 14b, 14c, 14d, 14e) respectif est généré par application d'un troisième algorithme d'apprentissage automatique (A3) à l'objet synthétique (14a, 14b, 14c, 14d, 14e) respectif, et le deuxième vecteur de caractéristiques (M2) étant mémorisé (S3) dans une mémoire de données.

6. Procédé mis en œuvre par ordinateur selon l'une des revendications précédentes, **caractérisé en ce que** les objets réels (12a, 12b, 12c, 12d) contenus dans les données d'images vidéo (10a), les données radar et/ou le nuage de points LiDAR sont classifiés en classes principales (C1, C2, C3, C4) par le premier algorithme d'apprentissage automatique (A1), les objets réels (12a, 12b, 12c, 12d) associés à une classe principale (C1, C2, C3, C4) étant classifiés en sous-classes (12d1, 12d2) par application d'un quatrième algorithme d'apprentissage automatique (A4).

7. Procédé mis en œuvre par ordinateur selon l'une des revendications précédentes, **caractérisé en ce que**, en cas d'égalité de type, en particulier de structure de données de même type, du premier vecteur de caractéristiques (M1) et du deuxième vecteur de caractéristiques (M2), une comparaison directe entre le premier vecteur de caractéristiques M1) et la pluralité de deuxièmes vecteurs de caractéristiques (M2) est effectuée afin d'identifier le degré de similitude (MA).

8. Procédé mis en œuvre par ordinateur selon l'une des revendications précédentes, **caractérisé en ce que**, en cas de différence de types, en particulier de structures de données de types différents, entre le premier vecteur de caractéristiques (M1) et le deuxième vecteur de caractéristiques (M2), un classificateur créant une corrélation entre le premier vecteur de caractéristiques (M1) et le deuxième vecteur de caractéristiques (M2) est utilisé afin d'identifier le degré de similitude (MA) du deuxième vecteur de caractéristiques (M2) avec le premier vecteur de caractéristiques (M1).

9. Procédé mis en œuvre par ordinateur selon l'une des revendications précédentes, **caractérisé en ce que** la pluralité de premiers vecteurs de caractéristiques (M1) et/ou de deuxièmes vecteurs de caractéristiques (M2) mémorisés représentent des données d'image 2D, des données d'image 3D, des données radar et/ou un nuage de points LiDAR.

10. Procédé mis en œuvre par ordinateur selon l'une des revendications 3 à 9, **caractérisé en ce que**, dans le cas où le degré de similitude (MA) du deuxième vecteur de caractéristiques identifié (M2) avec le premier vecteur de caractéristiques (M1) est inférieur à la valeur seuil prédéterminée (T), un message (ME) est généré indiquant que la pluralité de deuxièmes vecteurs de caractéristiques (M2) mémorisés ne présentent pas un degré de similitude (MA) suffisant avec le premier vecteur de caractéristiques (M1) identifié.

11. Système (2) pour générer un environnement de véhicule virtuel (U2) destiné à tester des fonctions de conduite hautement automatisées d'un véhicule à moteur en utilisant des données d'images vidéo (10a), des données radar et/ou un nuage de points LiDAR préalablement acquis d'un environnement de véhicule réel (U1), comprenant:
des moyens (20) pour recevoir les données d'images vidéo (10a), les données radar et/ou le nuage de points LiDAR préalablement acquis de l'environnement de véhicule réel (U1), y compris une pluralité d'objets réels (12a, 12b, 12c, 12d, 12e) marqués au préalable ou marqués par la suite par utilisation d'au moins un premier algorithme d'apprentissage automatique (A1);
des moyens (22) pour appliquer au moins un premier algorithme d'apprentissage automatique (A1) aux données d'image vidéo (10a), aux données radar et/ou au nuage de points LiDAR afin de détecter et classifier la pluralité d'objets réels (12a, 12b, 12c, 12d, 12e);
des moyens (24) pour générer un premier vecteur de caractéristiques (M1) représentant un objet réel respectif (12a, 12b, 12c, 12d, 12e), lesquels moyens (24) sont conçus pour appliquer un deuxième algorithme d'apprentissage automatique (A2) à l'objet réel respectif (12a, 12b, 12c, 12d, 12e) et des moyens (26) pour mémoriser le premier vecteur de caractéristiques (M1);
des moyens (28) pour fournir une pluralité de deuxièmes vecteurs de caractéristiques (M2) mémorisés, lesquels représentent des objets générés de manière synthétique (14a, 14b, 14c, 14d, 14e);
des moyens (30) pour identifier un deuxième vecteur de caractéristiques (M2) présentant un degré de similitude (MA) le plus élevé avec le premier vecteur de caractéristiques (M1);
des moyens (32) pour sélectionner (S6A) le deuxième vecteur de caractéristiques (M2) identifié et appeler un objet synthétique (14a, 14b, 14c, 14d, 14e) mémorisé, associé au deuxième vecteur de caractéristiques (M2), qui correspond à l'objet réel (12a, 12b, 12c, 12d, 12e) et des moyens (34) pour générer de manière procédurale l'objet synthétique (14a, 14b, 14c, 14d, 14e) correspondant à l'objet réel (12a, 12b, 12c, 12d, 12e), les moyens (32) pour sélectionner (S6A) le deuxième vecteur de caractéristiques (M2) identifié et appeler un objet synthétique (14a, 14b, 14c, 14d, 14e) mémorisé, associé au deuxième vecteur de caractéristiques (M2), ou les moyens (34) pour générer de manière procédurale l'objet synthétique (14a, 14b, 14c, 14d, 14e) correspondant à l'objet réel (12a, 12b, 12c, 12d, 12e) étant utilisés en fonction du degré de similitude identifié (MA); et
des moyens (36) pour intégrer l'objet synthétique (14a, 14b, 14c, 14d, 14e) dans un environnement de véhicule virtuel prédéterminé (U2), l'environnement de véhicule virtuel étant une représentation générée par ordinateur de l'environnement de véhicule réel détecté à base de capteurs,
le deuxième vecteur de caractéristiques (M2) identifié étant sélectionné et l'objet synthétique (14a, 14b, 14c, 14d, 14e) mémorisé, associé au deuxième vecteur de caractéristiques (M2), qui correspond à l'objet réel (12a, 12b, 12c, 12d, 12e), étant appelé (S6A) dans le cas où le degré de similitude (MA) du deuxième vecteur de caractéristiques identifié (M2) avec le premier vecteur de caractéristiques (M1) est supérieur ou égal à une valeur seuil prédéterminée (T),
et l'objet synthétique (14a, 14b, 14c, 14d, 14e) étant généré de manière procédurale (S6B) dans le cas où le degré de similitude (MA) du deuxième vecteur de caractéristiques identifié (M2) avec le premier vecteur de caractéristiques (M1) est inférieur à une valeur seuil prédéterminée (T).

12. Programme informatique comprenant un code de programme pour mettre en œuvre le procédé selon l'une des revendications 1 à 10 lorsque le programme informatique est exécuté sur un ordinateur.

13. Support de données lisible par ordinateur avec code de programme d'un programme informatique, pour mettre en œuvre le procédé selon l'une des revendications 1 à 10 lorsque le programme informatique est exécuté sur un ordinateur.
